# EUROPÄISCHE PATENTSCHRIFT

(11) **EP 4 219 106 B1**
(45) Veröffentlichungstag und Bekanntmachung des Hinweises auf die Patenterteilung: **05.11.2025**
(21) Anmeldenummer: 22189510.5
(22) Anmeldetag: 09.08.2022
(51) Int. Cl.: B27N 1/02, B27N 3/00, B27N 3/04, C08L 97/02, C09J 161/06, C09J 161/24, C09J 161/28, B27N 1/00

(54) **VERFAHREN ZUM HERSTELLEN EINER FASERPLATTE**
METHOD FOR PRODUCING A FIBREBOARD.
PROCÉDÉ DE FABRICATION D'UN PANNEAU DE FIBRES

(30) Priorität: 31.01.2022 EP 22154303
(43) Veröffentlichungstag der Anmeldung: 02.08.2023
(73) Patentinhaber: SWISS KRONO Tec AG, 6004 Luzern (CH)
(72) Erfinder: Braun, Roger, 4133 Willisau (CH); Hasch, Joachim, 13114 Berlin (DE); Moisch, Dorin, 6014 Luzern (CH)
(74) Vertreter: Kalkoff & Partner Patentanwälte mbB

(56) Entgegenhaltungen:
- WO-A1-2018/054732
- DE-C1- 19 603 330
- DE-C1- 19 725 829

## Beschreibung

Die Erfindung betrifft ein Verfahren zum Herstellen einer Faserplatte. Die Erfindung betrifft weiter eine Faserplatte.

Faserplatten, insbesondere wasserfeste Faserplatten, sind z. B. aus der WO 2020/211988 A1 bekannt. Allerdings haben sich diese Faserplatten durch den hohen Bindemittelanteil als sehr teuer erwiesen. Faserplatten allgemein werden in der WO 2018/054732 A1 und in der DE 196 03 330 C1 beschrieben. Die DE 197 25 829 C1 beschreibt eine Oberflächenlackierung.

Die Aufgabe besteht darin, eine wasserfeste Faserplatte bereitzustellen, die preiswerter herstellbar ist.

Die Aufgabe wird gelöst durch ein Verfahren nach Anspruch 1 und eine Faserplatte nach Anspruch 10.

Das erfindungsgemäße Verfahren zum Herstellen einer wasserfesten Faserplatte, aufweisend Fasern und Bindemittel, erfolgt mit den Schritten:
- Bereitstellen von Fasern,
- Bereitstellen des Bindemittels,
- Bereitstellen eines elastifizierenden Zusatzes,
- Auftragen des Bindemittels und des elastifizierenden Zusatzes,
- Formen des Faserkuchens aus den mit Bindemittel und elastifizierendem Mittel versehenen Fasern,
- Verpressen des Faserkuchens in einer Presse unter Aushärten des Bindemittels zum Erzeugen einer Faserplatte, wobei
als Bindemittel 20 Gew.-% bis 35 Gew.-% Melaminharz oder Phenolharz und 5 Gew.-% bis 20 Gew.-% Harnstoffharz sowie 0,1 Gew.-% bis 7 Gew.-% des elastifizierenden Zusatzes, jeweils bezogen auf das Gesamtgewicht der Faserplatte atro, eingesetzt werden.

Harnstoffharz ist preiswerter als Melaminharz. Es hat sich überraschend herausgestellt, dass das Bindemittel für die wasserfeste Faserplatte durch Harnstoffharz ergänzt werden kann. Harnstoffharz ist hydrolysierbar, insbesondere durch heißes Wasser, und erschien von daher ungeeignet für die Herstellung wasserfester Faserplatten. Insofern war die Eignung von Harnstoffharz für die Herstellung von wasserfesten Faserplatten für Fachleute unerwartet. Der Einsatz von Harnstoffharz führt zu preiswerteren Faserplatten.

Zur Herstellung der erfindungsgemäßen wasserfesten Faserplatte werden zunächst Fasern bereitgestellt. Es können organische oder anorganische Fasern eingesetzt werden. Natürliche Fasern, z. B. lignocellulosische Fasern, Baumwoll- oder Leinenfasern oder synthetische Fasern wie beispielsweise Fasern aus thermoplastischem Material wie Polyethylen oder Polypropylen, aber auch aus Polycarbonat, Polyacrylat, Polymethacrylat oder Polyurethan können zur Herstellung der erfindungsgemäßen Faserplatte eingesetzt werden. Anorganische Fasern wie Carbonfasern oder Fasern aus mineralischem oder keramischem Rohstoff oder Glasfasern sind insbesondere in Mischung mit anderen Fasern geeignet zur Herstellung der wasserfesten Faserplatte. Insbesondere können Mischungen von Fasern, insbesondere Mischungen der vorgenannten Fasern, zur Herstellung des erfindungsgemäßen Werkstoffs eingesetzt werden. Mischungen von Fasern ermöglichen das Einstellen von Eigenschaften des erfindungsgemäßen Werkstoffs, z. B. der Elastizität oder der Biegeeigenschaften, der Formstabilität, der Festigkeit, aber auch der Herstellungseigenschaften bzw. der Verarbeitbarkeit. Werden Fasern aus nachwachsenden Rohstoffen, insbesondere lignocellulosische Fasern, z. B. Fasern aus Holz, Bambus oder Einjahrespflanzen eingesetzt, so stehen preiswerte, einfach zu verarbeitende Fasern zur Verfügung. Natürliche Faser werden bevorzugt unbehandelt eingesetzt, d. h., die Faserkomponenten Cellulose und Lignin sowie ggf. Hemicellulosen sind, nicht in ihren Eigenschaften durch chemische Verfahren verändert. Der Einsatz hygroskopischer Fasern ist nicht ausgeschlossen, insbesondere sofern diese vor dem Herstellen bzw. Verpressen des erfindungsgemäßen Werkstoffs mindestens teilweise getrocknet werden.

Die vorstehend erwähnten lignocellulosischen Fasern umfassen insbesondere sämtliche Fasern, die durch chemische oder physikalische Verfahren aus Pflanzen gewonnen wurden. Typische Beispiele für physikalisch gewonnene Fasern sind Nadelholzfasern, Laubholzfasern oder Bambusfasern, oder Fasern aus anderen organischen Rohstoffen, die durch mechanische Zerfaserung gewonnen wurden. Ein Beispiel für chemisch gewonnene Fasern sind z. B. Zellstofffasern aus Holz, Einjahrespflanzen oder anderen Rohstoffen, insbesondere nachwachsenden Rohstoffen. Besonders typisch werden Holzfasern aus mechanischer Zerfaserung eingesetzt, wobei angestrebt wird, den Verlust an Lignin und Hemicellulosen möglichst zu minimieren. Auch Mischungen von Fasern können eingesetzt werden, insbesondere um Eigenschaften des Werkstoffs (Festigkeitseigenschaften, Gewicht) einzustellen, aber auch um den Rohstoff Faser kostenoptimiert einzusetzen. Fasern im Sinne dieser Erfindung sind auch Faserbündel; eingeschlossen sind auch kleinere Späne, soweit deren Fasern noch weitgehend mit Bindemittel beschichtet werden können. Es wird erfindungsgemäß bevorzugt, wenn der Faseranteil der Faserplatte über 50 Gew.-% des Gesamtgewichts der Faserplatte beträgt. Es wird weiter bevorzugt, wenn der Anteil lignocellulosischer Fasern mehr als 50 Gew.-% des gesamten Faseranteils beträgt.

Soweit im Zusammenhang mit dieser Erfindung Angaben zum Einsatz von Substanzen, typisch Bindemittel, elastifizierende oder hydrophobierende Mittel, Härter, Farbe oder andere Additive, insbesondere Angaben in Gew.-% gemacht werden, beziehen sich diese Angaben auf 100% Feststoff. Die tatsächliche Dosierung der Substanzen kann in Lösung, in Mischung oder auf andere Weise mit einem Feststoffgehalt von weniger als 100% erfolgen, in so einem Fall ist der Feststoffgehalt der zugeführten Lösung oder Mischung angegeben bzw. anzugeben. Nachfolgend werden Beispiele für übliche Feststoffgehalte angegeben, die jedoch nicht als bindend anzusehen sind: Für Bindemittel und auch für ein elastifizierendes Mittel oder für eine Emulsion kann ein Feststoffgehalt von z. B. 50 Gew.-% bis 60 Gew.-% angenommen werden, für Härter ist ein Feststoffgehalt von z. B. 15 Gew.-% üblich, eine Farbe kann beispielsweise einen Feststoffgehalt von 24 Gew.-% aufweisen. Insbesondere mit Bezug auf Fasern oder faserhaltige Produkte wie z. B. Faserplatten wird im Zusammenhang mit der Erfindung der Begriff "atro" verwendet, der sich auf absolut trockene Fasern bzw. faserhaltige Produkte bezieht. Fasern oder faserhaltige Produkte bzw. wasserhaltige Produkte werden als "atro" bezeichnet, wenn sie bei 105 °C bis zur Gewichtskonstanz getrocknet wurden.

Für die Herstellung der wasserfesten Faserplatte wird Bindemittel bereitgestellt. Eingesetzt werden Melaminharz oder Phenolharz einerseits und Harnstoffharz andererseits. Das erfindungsgemäß eingesetzte Bindemittel weist vorzugsweise Melaminharz auf. Melaminharz, typisch Melamin-Formaldehydharz, wird in wässriger Lösung eingesetzt, wobei der Feststoffgehalt des Melaminharzes bevorzugt mindestens 45 Gew.-% bezogen auf die wässrige Lösung beträgt, vorteilhaft beträgt der Feststoffgehalt über 50 Gew.-%. Die Obergrenze des Feststoffgehalts wird durch die Löslichkeit und ggf. Verarbeitbarkeit des Melaminharzes z. B. in Sprühdüsen vorgegeben. Alternativ kann Melaminharz auch als Feststoff, insbesondere in Form von Pulver oder Granulat eingesetzt werden. Melaminharz wird als Bindemittel bevorzugt, weil es sich als nichtquellend und nicht-hygroskopisch sowie als beständig gegen Hydrolyse erweist. Alternativ zu Melaminharz oder in Mischung mit Melaminharz kann Phenolharz eingesetzt werden. Phenolharz ist zwar wasserfest, aber dunkelfarbig, und durch seinen Alkaligehalt in geringem Maße hygroskopisch, was bei Verwendung in einer wasserfesten Faserplatte eventuell nachteilig sein kann. Geeignete Harze sind beispielsweise Guanaminharz, Melamin-Formaldehydharz, Melamin-Harnstoff-Formaldehydharz (MUF-Harz), aber auch Melamin-Harnstoff-Phenol-Formaldehydharz (MUPF). Die einzelnen vorgenannten Harze, insbesondere Melaminharz, Harnstoffharz und Phenolharz können sowohl in Mischung miteinander als auch als Mischkondensate eingesetzt werden. Ein Guanaminharz wird z. B. in der EP 0 011 049 A1 offenbart.

Melaminharz und/oder Phenolharz werden erfindungsgemäß in Kombination mit Harnstoffharz eingesetzt. In Kombination bedeutet im Zusammenhang mit dieser Erfindung, dass eine Mischung von zwei oder mehr Bindemitteln gleichzeitig oder in zeitlichem Abstand voneinander auf die Faser aufgebracht wird, z. B. als MF-Harz (Melamin-Formaldehyd-Harz) in Mischung mit Harnstoffharz. Alternativ können Mischkondensate wie MUF-Harz oder MUPF-Harz eingesetzt werden. Eine Kombination von Bindemitteln wird nacheinander eingesetzt, z. B., weil sie nicht in Mischung eingesetzt werden können oder weil ein getrenntes Auftragen von verschiedenen Bindemitteln vorteilhafte Wirkung hat. Es wird bevorzugt, wenn das Bindemittel überwiegend Melaminharz aufweist.

Erfindungsgemäß beträgt der Anteil von Melaminharz am Bindemittel 20 Gew.-% bis 35 Gew.-% bezogen auf das Gesamtgewicht der Faserplatte (atro), insbesondere 25 Gew.-% bis 33 Gew.-%, vorteilhaft 27 Gew.-% bis 31 Gew.-%, besonders bevorzugt 20 Gew.-% bis 27 Gew.-%. Das Melaminharz kann ganz oder teilweise durch Phenolharz ersetzt werden. Der Anteil an Harnstoffharz beträgt erfindungsgemäß 5 Gew.-% bis 20 Gew.-%, vorteilhaft 5 bis 18 Gew.-%, bevorzugt 12 Gew.-% bis 18 Gew.-%, besonders bevorzugt 14 Gew.-% bis 17 Gew.-%, jeweils bezogen auf das Gesamtgewicht der Faserplatte (atro). Der hohe Anteil an Harnstoffharz in einer wasserfesten Faserplatte ist außergewöhnlich. Da Harnstoffharz ein preiswertes Bindemittel ist, trägt der Einsatz von Harnstoffharz dazu bei, die Kosten der erfindungsgemäßen Faserplatte signifikant zu senken.

Die Gesamtmenge an Bindemittel, die zur Herstellung der wasserfesten Faserplatte eingesetzt wird, beträgt bevorzugt bis zu 48 Gew.-%, besonders bevorzugt von bis zu 45 Gew.-%, vorteilhaft bis zu 43 Gew.-%, besonders vorteilhaft 25 Gew.-% bis 40 Gew.-%, jeweils bezogen auf das Gesamtgewicht der Faserplatte (atro). Die Gesamtmenge an Bindemittel, die zur Herstellung der wasserfesten Faserplatte eingesetzt wird, kann bevorzugt z. B. maximal 40 Gew.-%, vorteilhaft maximal 35 Gew.-%, besonders vorteilhaft maximal 30 Gew.-% betragen, während die Mindest-Einsatzmenge vorteilhaft bei 25 Gew.-% bezogen auf das Gesamtgewicht der Faserplatte (atro) liegt. Auch der gegenüber bekannten wasserfesten Faserplatten reduzierte Gesamteinsatz an Bindemittel trägt dazu bei, die Kosten der Herstellung der wasserfesten Faserplatte zu senken. Es scheint ungewöhnlich, dass eine Verringerung des Einsatzes von Bindemittel bei der Herstellung der wasserfesten Faserplatte möglich ist. Um so überraschender, dass eine nicht-quellende bzw. wenig-quellende, wasserfeste Faserplatte mit diesem reduzierten Einsatz an Bindemittel herstellbar ist. Setzt man die Gesamtmenge des eingesetzten Bindemittels in Bezug zu den Mengen, in denen Melaminharz und/oder Phenolharz einerseits und Harnstoffharz andererseits eingesetzt werden, so wird deutlich, dass die jeweiligen Mengen von Melaminharz bzw. Phenolharz einerseits und Harnstoffharz andererseits innerhalb eines weiten Bereichs variiert werden können. Dies gibt Flexibilität bei der Herstellung der erfindungsgemäßen Faserplatte und ermöglicht, insbesondere durch den Einsatz von preiswertem Harnstoffharz, Kosteneinsparungen in einem weiten Bereich.

Vorteilhaft werden Melaminharz bzw. Phenolharz einerseits und Harnstoffharz andererseits in einem Verhältnis von 3,5 : 1 bis 1,5 : 1, vorteilhaft zwischen 3 : 1 und 2 : 1, insbesondere von 2,5 : 1, eingesetzt. Innerhalb der vorgenannten Grenzen kann das Verhältnis zwischen Melaminharz bzw. Phenolharz einerseits und Harnstoffharz andererseits stufenlos eingestellt werden. Mischungen von Melamin- bzw. Phenolharz einerseits und Harnstoffharz andererseits, die außerhalb dieses Mischungsbereichs liegen, ermöglichen die Herstellung einer wasserfesten Faserplatte, sie nutzen die Vorteile der Erfindung nur in geringerem Umfang.

Vorteilhaft werden thermoplastische Bindemittel vermieden bzw. ausgeschlossen, insbesondere wird ein Einsatz von thermoplastischen Bindemitteln von mehr als 7 Gew.-% vermieden bzw. ausgeschlossen. Die erfindungsgemäße Faserplatte ist bevorzugt frei von Halogenen (z. B. Fluor, Chlor), aber auch von Terephthalaten.

Der plattenförmige Werkstoff kann nach einer vorteilhaften Ausführung durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat, aber auch einer modifizierten Isocyanat-Verbindung in seinen elastischen Eigenschaften modifiziert, insbesondere verbessert werden. Acrylat oder Styrolacrylat werden bevorzugt zum Elastifizieren der erfindungsgemäßen wasserfesten Faserplatte eingesetzt, insbesondere in Form eines flüssigen Zusatzes wie z. B. einer Dispersion oder Emulsion, weil sie wasserfest sind. Bevorzugt werden Acrylat und Styrolacrylat mit einer Glasübergangstemperatur von TG kleiner 0 °C eingesetzt. Aber auch Glykol, z. B. Mono- oder Diethylenglykol sind zum Elastifizieren der wasserfesten Faserplatte geeignet, ebenso wie Caprolactam, längerkettige Diole oder Triole, z. B. Glycerin und auch Polyole, Zucker, Zuckeralkohole oder Guanaminverbindungen sind als elastifizierender Zusatz geeignet. Die vorstehend genannten elastifizierenden Zusätze können jeweils für sich allein, aber auch in Mischung von zwei oder mehr der vorgenannten Komponenten eingesetzt werden. Der Zusatz von Elastomeren oder Thermoplasten reduziert die Sprödigkeit der wasserfesten Faserplatte und verbessert deren elastische Eigenschaften, z. B. den E-Modul. Außerdem bewirkt der Zusatz von elastifizierenden Zusätzen ein besseres Planliegen der erfindungsgemäßen wasserfesten Faserplatte. Der elastifizierende Zusatz wird als Feststoff berechnet anteilig bezogen auf die die Gesamtmenge der wasserfesten Faserplatte (atro) in einer Menge von 0,1 Gew.-% bis zu 7 Gew.-%, bevorzugt von 1 Gew.-% bis 5 Gew.-%, vorteilhaft 2 Gew.-% bis 4 Gew.-% eingesetzt.

Die elastifizierenden Zusätze werden beispielsweise dem Bindemittel, z. B. Melaminharz, vor dem Auftragen auf die Fasern zugesetzt und gemeinsam mit dem Bindemittel auf die Fasern aufgetragen. Alternativ wird das Mittel zum Elastifizieren vorteilhaft vor oder, weiter bevorzugt, nach dem Bindemittel auf die Fasern aufgetragen, z. B. am Ende der Blow-Line im Trocknerrohr.

Nach einer besonders vorteilhaften Ausführung der Erfindung wird der elastifizierende Zusatz bereits bei der Herstellung des Bindemittels zugegeben und in das Bindemittel einkondensiert. Dieses Vorgehen gewährleistet eine hohe Wirksamkeit des elastifizierenden Mittels.

Nach einer vorteilhaften Ausführung der Erfindung wird dem Bindemittel ein Härter zugegeben, der das Aushärten des Bindemittels, in der Regel eine chemische Reaktion wie z. B. eine Kondensationsreaktion oder eine Additionsreaktion beschleunigt. Durch die Zugabe des Härters wird das Aushärten des Bindemittels in der Presse optimiert. Der Härter wird dabei nicht Bestandteil des Bindemittels, da er als Katalysator lediglich eine chemische Reaktion auslöst, nicht jedoch Bestandteil des entstehenden Polymers wird. Der Härter wird in einer Menge von 0,1 Gew.-% bis 2 Gew.-%, bevorzugt bis zu 1 Gew.-%, jeweils bezogen auf die Gesamtmenge der wasserfesten Faserplatte (atro) eingesetzt und weiter bevorzugt nach dem Auftragen des Bindemittels aufgetragen, vorteilhaft z. B. am Ende der Blow-Line im Trocknerrohr.

Weiter vorteilhaft erweist sich der Einsatz eines hydrophobierenden Mittels zur Herstellung der wasserfesten Faserplatte gemäß der Erfindung. Verwendet werden können z. B. Paraffin oder Wachs, die typischerweise in Mengen von bis zu 4 Gew.-% bezogen auf das Gewicht des plattenförmigen Werkstoffs eingesetzt werden, meist in Mengen von bis zu 2 Gew.-%, oft in einer Menge von 0,1 Gew.-% bis 1,5 Gew.-%, jeweils bezogen auf die Gesamtmenge der wasserfesten Faserplatte (atro). Das hydrophobierende Mittel wird typisch in flüssiger Form eingesetzt, z. B. als Emulsion oder Dispersion. Alternativ kann Heißparaffin eingesetzt werden. Es kann vor oder nach dem Bindemittel oder gemeinsam mit dem Bindemittel eingesetzt werden. Auch der Einsatz eines hydrophobierenden Mittels trägt zu einer Reduzierung der Quellungsneigung des plattenförmigen Werkstoffs bei.

Um in der Verwendung der wasserfesten Faserplatte sicherzustellen, dass die erfindungsgemäße wasserfeste Faserplatte einwandfrei identifiziert werden kann, kann es sich als vorteilhaft erweisen, Farbe zum Einfärben der erfindungsgemäßen Faserplatte einzusetzen. Dazu können z. B. 0,01 Gew.-% bis 2 Gew.-%, vorteilhaft 0,05 Gew.-% bis 1,5 Gew.-%, insbesondere 0,1 Gew.-% bis 1 Gew.-% Farbe bezogen auf die Gesamtmenge der wasserfesten Faserplatte (atro) eingesetzt werden.

Optional weist die wasserfeste Faserplatte Zuschlagstoffe auf. Füllstoffe können als ein möglicher Zuschlagstoff dazu beitragen, das Gewicht des plattenförmigen Werkstoffs zu optimieren, meist zu minimieren, im Einzelfall aber auch zu Erhöhen oder sie können dazu beitragen, die Matrixstruktur aus Bindemittel und Fasern weiter zu verbessern. Ein Zuschlagstoff oder eine Kombination aus Zuschlagstoffen können alternativ oder ergänzend dazu dienen, bestimmte Eigenschaften der Platten zu optimieren, z. B. elektrische oder thermische Leitfähigkeit, isolierende Eigenschaften oder Festigkeitseigenschaften. Ein Zuschlagstoff ersetzt in der erfindungsgemäßen Faserplatte in der Regel Fasern. Da die wasserfeste Faserplatte in Gegenwart von Wasser eine minimale Quellung, insbesondere eine minimierte Dickenquellung aufweisen soll, werden nicht-hygroskopische oder nicht-quellende Zuschlagstoffe bzw. Füllstoff sowie Zuschlagstoffe bzw. Füllstoffe bevorzugt, die beständig gegen Hydrolyse sind. Solche Zuschlagstoffe bzw. Füllstoffe können mineralische Partikel sein, aber auch keramische, synthetische oder Partikel aus Glas oder Metall. Beispielsweise können Calciumcarbonat (CaCO3) und/oder Schwerspat (BaSO4) als Füllstoffe eingesetzt werden, Partikel aus Metall können zur Verbesserung der thermischen und/oder elektrischen Leitfähigkeit eingesetzt werden oder expandierte Kunststoffpartikel können zur Verminderung des Gewichts eingesetzt werden. Die Größe der Partikel ist bevorzugt nicht größer als ein Millimeter, vorzugsweise zwischen 10 µm und 800 µm. Die Partikel können eine beliebige Form aufweisen, z. B. körnig oder pulverförmig, aber auch fadenförmig. Es können auch Mischungen verschiedener Partikel eingesetzt werden, z. B. Mischungen verschiedener Materialien, Formen oder Größe. Es werden bis zu 30 Gew.-% Zuschlagstoff bezogen auf das Gesamtgewicht der wasserfesten Faserplatte (atro) eingesetzt, besonders bevorzugt bis zu 20 Gew.-%, vorteilhaft bis zu 15 Gew.-%. Die untere Grenze der Einsatzmenge ergibt sich durch die Nachweisbarkeit eines Zuschlagstoffs bzw. Füllstoffs. Der Zuschlagstoff bzw. Füllstoff kann vor oder nach dem Auftragen des Bindemittels auf die Fasern aufgebracht werden, bevorzugt durch Sprühen oder Streuen.

Die Pressbedingungen für die wasserfeste Faserplatte, insbesondere Druck und Temperatur, sind denen bekannter Holzwerkstoffe im Wesentlichen gleich. Druck und Temperatur für die Herstellung der erfindungsgemäßen Faserplatte liegen z. B. im Bereich üblicher HDF-Platten (hochdichter Faserplatten). Die Pressdauer kann jedoch deutlich unter der Pressdauer für eine bekannte, nicht-wasserfeste HDF-Platte liegen. Der erfindungsgemäße Werkstoff lässt sich ausgezeichnet in Pressen herstellen, wie sie für die Herstellung von Holzwerkstoffen eingesetzt werden. Insbesondere sind kontinuierliche oder diskontinuierliche Heißpressen, z. B. kontinuierliche Doppelbandpressen mit umlaufenden, beheizten Metallbändern oder taktweise arbeitenden Pressen mit Pressblechen. Damit lassen sich Plattenformate herstellen, die -anders als bei WPC- nicht auf die Herstellung schmaler Dielenformate mit einer Breite von bis zu ca. 100 cm limitiert sind. Vielmehr können konventionelle Plattenformate bereitgestellt werden, wie sie für Holzwerkstoffplatten üblich sind.

Das Herstellen des Faserkuchens erfolgt, wie bei Holzwerkstoffen üblich, in der Regel durch Streuen. Die vorteilhaft mit der gesamten Menge des Bindemittels beleimten, vorzugsweise getrockneten Fasern, werden auf einen Träger, meist auf ein Förderband, gestreut, meist in einer homogenen Schicht, aber alternativ auch in mehreren Schichten, wobei die Schichten eine unterschiedliche Zusammensetzung hinsichtlich Fasern, Bindemittel oder Additiven aufweisen können. Der gestreute Faserkuchen wird auf dem Träger ggf. zuerst durch eine Vorpresse geführt und dann in einer Presse verpresst.

Jede Presse, die in ausreichender Weise Druck und Temperatur aufbringt, ist geeignet, sowohl eine diskontinuierliche Plattenpresse, in der die Faserplatte zwischen zwei Blechen verpresst wird, als auch insbesondere eine kontinuierliche Presse, in der die wasserfeste Faserplatte zwischen zwei umlaufenden Metallbändern gepresst wird. Bevorzugt werden Heißpressen eingesetzt, deren Pressbleche oder umlaufende Metallbänder auf eine vorgegebene Temperatur aufgeheizt sind. Geeignete Presstemperaturen können von 110 °C bis 250 °C, bevorzugt von 110 °C bis 180 °C, vorteilhaft von 140 °C bis 160 °C (Temperatur des Pressblechs oder Pressbandes) gewählt werden. Je dünner die Platte, desto niedriger kann die Presstemperatur gewählt werden. Alternativ kann die Pressgeschwindigkeit erhöht werden, d. h., die Pressdauer verkürzt werden. Geeignete Pressdrücke liegen beispielsweise in einem Bereich von 0,3 N/mm² bis 5,5 N/mm², insbesondere 1 N/mm² bis 3 N/mm². Die Pressdauer beträgt vorteilhaft 6 Sekunden/mm Plattendicke (im Folgenden: s/mm) bis 60 s/mm, meist 10 s/mm bis 30 s/mm, bevorzugt 20 s/mm bis 25 s/mm. Um die Pressdauer zu minimieren, kann die Temperatur innerhalb des vorgenannten Rahmens erhöht werden. Bei kontinuierlichen Pressen beträgt die Vorschubgeschwindigkeit der umlaufenden Metallbänder, zwischen denen die wasserfeste Faserplatte durch Verpressen hergestellt wird, in Abhängigkeit von der Länge der Presse meist zwischen 250 mm/Sekunde und 400 mm/Sekunde, bevorzugt zwischen 300 mm/Sekunde und 350 mm/Sekunde.

Dem eigentlichen Pressvorgang kann eine Vorpresse zum Verdichten des Faserkuchens vorgeschaltet sein. Optional kann der Presse eine Vorrichtung zum Abkühlen der Faserplatte nachgeschaltet sein, insbesondere eine Vorrichtung zum Abkühlen unter einem vorgegebenen Pressdruck, der geringer sein kann als der Pressdruck während des Pressens des Werkstoffs. Oft wird auch ein Kühlsternwender zum Kühlen der Platten eingesetzt. Das Kühlen verhindert ein Verformen der Platte.

Die Offenbarung umfasst auch eine wasserfeste Faserplatte, aufweisend Fasern und Bindemittel, wobei die Faserplatte bis zu 30 Gew.-% Melaminharz oder Phenolharz und bis zu 20 Gew.-% Harnstoffharz, jeweils bezogen auf das Gesamtgewicht der Faserplatte (atro), aufweist. Die Vorteile der Zusammensetzung dieser wasserfesten Faserplatte wurden bereits vorstehend im Zusammenhang mit dem erfindungsgemäßen Verfahren erläutert. Sämtliche vorstehend im Zusammenhang mit dem Verfahren erläuterten Bestandteile der wasserfesten Faserplatte, können Bestandteil der erfindungsgemäßen wasserfesten Faserplatte sein, insbesondere in den dort genannten Anteilen. Dabei können einzelne der in dieser Anmeldung für das Verfahren oder die Faserplatte beschriebenen Merkmale frei und -soweit technisch möglich- unabhängig voneinander miteinander kombiniert werden.

Die erfindungsgemäße wasserfeste Faserplatte zeichnet sich dadurch aus, dass sie unter Einfluss von Feuchtigkeit, namentlich Wasser, keine signifikante Dickenquellung aufweist. Eine Dickenquellung, die, bezogen auf die ursprüngliche Plattendicke, weniger als 3 %, bevorzugt weniger als 2 % beträgt, wird im Sinne der Erfindung als nichtsignifikant angesehen. Eine auf minimale Dickenquellung optimierte, erfindungsgemäße als wasserfest angesehene Faserplatte weist eine Dickenquellung gemäß DIN EN 317 bzw. eine Kantenquellung gemäß DIN 13329 von nur 0,5% bis 1% auf. Dabei ist anzumerken, dass die erfindungsgemäße Faserplatte unbeschichtet ist, so dass bei den in dieser Anmeldung angegebenen Daten in Anlehnung an die DIN EN 317 geprüft wird.

Die erfindungsgemäße wasserfeste Faserplatte ist somit quellungsarm oder, bei Erreichen einer maximalen Dickenquellung von bis zu 1 % bezogen auf die ursprünglichen Plattendicke, quellungsfrei und formstabil. Damit kann z. B. auf bekannten Vorrichtungen zur Herstellung von Holzwerkstoffplatten nun ein preiswerter, plattenförmiger, im Wesentlichen nicht-quellender, gegenüber Wasser bzw. Luftfeuchtigkeit formstabiler Werkstoff hergestellt werden, der nicht auf schmale Formate begrenzt ist und der bevorzugt den Einsatz nachwachsender Rohstoffe maximiert.

Die erfindungsgemäße wasserfeste Faserplatte weist gute Festigkeitseigenschaften, insbesondere eine hohe Querzugfestigkeit auf, die mindestens 2,5 N/mm2, bevorzugt bis zu 3 N/mm2, insbesondere bis zu 4 N/mm2 beträgt. Die erfindungsgemäße Faserplatte weist eine hohe Druckfestigkeit auf. Aus den guten Festigkeitseigenschaften resultiert, dass zum Befestigen einer erfindungsgemäßen wasserfesten Faserplatte weniger Befestigungsmittel, z. B. Schrauben, eingesetzt werden müssen, weil das einzelne Befestigungsmittel besseren Halt in der Platte hat. Die höhere Querzugfestigkeit erlaubt zudem eine intensivere Bearbeitung einer erfindungsgemäßen Faserplatte, z. B. das Fräsen komplexer Profile in den Schmalflächen. So kann z.B. in die Schmalfläche einer nur 4,3 mm dicken Platte ein komplexes Profil eingearbeitet werden, das zwei ineinandergreifende Platten sowohl in vertikaler als auch in horizontaler Richtung zueinander ausrichtet bzw. miteinander verbindet. Die hohe Druckfestigkeit ermöglicht eine hohe Punktbelastung der wasserfesten Faserplatte, so dass sie sich z. B. für Ladeböden von Fahrzeugen oder als Boden für Lagerflächen eignet. Die hohe Biegesteifigkeit der wasserfesten Faserplatte lässt eine Verwendung als Konstruktionselement, z. B. für Wandaussteifungen zu.

Die Dichte der erfindungsgemäßen wasserfesten Faserplatte beträgt bevorzugt zwischen 1.000 kg/m³ und 1.800 kg/m³, insbesondere zwischen 1.000 kg/m³ und 1.600 kg/m³, vorteilhaft zwischen 1.000 kg/m³ und 1.300 kg/m³, besonders vorteilhaft zwischen 1.000 kg/m³ und 1.200 kg/m³. Die erfindungsgemäße Faserplatte zeigt, bedingt durch den hohen Einsatz an Bindemittel, gegenüber z. B. einem Holzwerkstoff, z. B. einer HDF-Platte, die einen geringeren Anteil an Bindemittel aufweist, ein höheres Gewicht.

Die erfindungsgemäße Faserplatte weist in der Regel zwei Hauptflächen auf, die im Folgenden auch als Ober- und Unterseite bezeichnet werden. Zwischen Ober- und Unterseite sind die Schmalflächen oder Kanten der Faserplatte angeordnet. Die Dicke der fertigen Faserplatte kann von 0,8 mm bis 50 mm betragen, typischerweise zwischen 1 mm und 25 mm, meist zwischen 3 mm und 20 mm. Eine typische Anwendung kann eine Dicke der wasserfesten Faserplatte von 4 mm bis 10 mm erfordern, insbesondere zwischen 4 mm und 7 mm. Die erfindungsgemäße Faserplatte kann ebene Hauptflächen aufweisen; die Ober- und/oder Unterseite können aber auch geprägt oder gefräst oder in anderer Weise bearbeitet sein, so dass sich, bezogen auf die Fläche des Werkstoffs, eine variable Dicke der Faserplatte ergibt, z. B. bei Möbelfronten, in die ein Relief eingearbeitet wird. Die wasserfeste Faserplatte weist bevorzugt eine über die Dicke im Wesentlichen homogene Zusammensetzung auf.

Die Ober- und Unterseiten, aber auch die Schmalflächen können mit üblichen Werkzeugen bearbeitet werden. Sie können z. B. gesägt, geschnitten oder gefräst werden. Die erfindungsgemäße Faserplatte ist in ihrer maximalen Länge und Breite allein durch verfügbare Pressen begrenzt, die zur Herstellung des Werkstoffs eingesetzt werden.

Kleinere Abmessungen können durch Zerlegen bzw. Aufteilen der fertigen wasserfesten Faserplatte hergestellt werden. Typische Abmessungen der Faserplatte können sein 5600 mm (Länge) x 2070 mm (Breite) oder 5600 mm x 2800 mm nach Herstellung in der Presse, 1380 mm x 195 mm, nach Aufteilen in Boden-, Wand- oder Deckenpaneele oder 3048 mm x 2800 mm. Letzteres Format eignet sich besonders gut zur Verwendung als Konstruktionsplatte im Bau, weil die Breite der Platte Geschosshöhe aufweist.

Die erfindungsgemäße wasserfeste Faserplatte kann vielseitig eingesetzt werden, insbesondere für konstruktive Zwecke im Innenausbau und im Außenbau bzw. in Aussenanwendungen. Sie kann z. B. eingesetzt werden als Fußboden-, Decken- und/oder Wandbelag, zur Herstellung von Innenausbauten oder Möbeln, insbesondere auch für den Innenausbau von Fahrzeugen wie z. B. Fahrzeugkabinen oder Bodenplatten, aber auch im Außenbereich, sowohl als Fassadenplatte bzw. Verkleidung, z. B. als vorgehängte Fassade, als Balkonverkleidung, als Außenfensterbank oder Dacheindeckung, aber auch für die Aussenmöblierung oder zum Herstellen von Schildern. Die wasserfeste Faserplatte nach der Erfindung eignet sich als Wand-, Decken- und/oder Bodenbelag in Feucht- bzw. Nassräumen, aber auch zu deren Ausstattung mit Trennwänden, Bänken oder Möbeln.

Die wasserfeste Faserplatte nach der Erfindung kann beschichtet, gefärbt, lackiert oder in anderer Weise dekorativ gestaltet werden. Insbesondere Oberflächenbeschichtungen, wie sie z. B. aus dem Bereich der Holzwerkstoffe bekannt sind, können auf die Oberfläche des erfindungsgemäßen Werkstoffs aufgebracht werden. Des Weiteren kann der erfindungsgemäße plattenförmige Werkstoff als ein Bestandteil einer Sandwichplatte eingesetzt werden, d. h, dass der erfindungsgemäße Werkstoff mit gleichen oder anderen folien- oder plattenförmigen Werkstoffen, insbesondere Holzwerkstoffplatten, aber auch Kunststoffplatten oder -folien zu einer Sandwichplatte verbunden werden. Eine Beschichtung kann die Quell- und Schwindeigenschaften der wasserfesten Faserplatte weiter verbessern.

Details der Erfindung werden an Hand eines Ausführungsbeispiels erläutert.

Zur Herstellung einer Faserplatte von 8 mm Dicke, alternativ von einer Dicke zwischen 0,8 mm und 50 mm, werden durch mechanische oder chemisch-mechanische Verfahren hergestellte lignocellulosische Fasern, alternativ synthetische Fasern, z. B. aus Kunststoff, anorganische Fasern oder chemisch hergestellte Fasern aus lignocellulosischem Material bereitgestellt. Es können auch Mischungen von verschiedenen Fasern eingesetzt werden. Im vorliegenden Ausführungsbeispiel werden 50 Gew.-% Fasern bereitgestellt.

Weiter wird Bindemittel bereitgestellt, vorliegend wie in Tab. 1 angegeben. Es werden für das vorliegende Ausführungsbeispiel 29 Gew.-% Melaminharz und 16 Gew.-% Harnstoffharz eingesetzt, jeweils bezogen auf das Gesamtgewicht der wasserfesten Faserplatte. Diese Einsatzmengen liegen innerhalb eines erfindungsgemäßen Bereichs von 20 Gew.-% bis 35 Gew.-% Melamin- oder Phenolharz und 5 Gew.-% bis 20 Gew.-% Harnstoffharz. Insgesamt werden 45 Gew.-% Bindemittel eingesetzt bezogen auf das Gesamtgewicht der Faserplatte (atro). Anteilig werden Melaminharz, das ganz oder anteilig durch Phenolharz ersetzt werden kann, und Harnstoffharz in einem Verhältnis von 1,9 : 1 bezogen auf das eingesetzte Gewicht der jeweiligen Komponenten eingesetzt, wobei das Verhältnis eingestellt werden kann in einem bevorzugten Bereich von 3,5:1 bis 1,5 :1. Das Melaminharz wird in diesem Ausführungsbeispiel als Lösung mit einem Feststoffgehalt von 50 Gew.-% aufgebracht; das Harnstoffharz wird ebenfalls als Lösung, jedoch mit einem Feststoffgehalt von 60 Gew.-% aufgebracht. Die beiden Komponenten des Bindemittels werden zeitgleich auf die Fasern aufgesprüht, alternativ können sie nacheinander aufgebracht werden.

Ein elastifizierendes Mittel, hier Styrolacrylat, wird als Lösung in einem Anteil von 2,5 Gew-% auf die Fasern aufgesprüht. Das elastifizierende Mittel kann in einer Menge von 0,1 Gew.-& bis 7 Gew.-& bezogen auf das Gesamtgewicht der Faserplatte (atro) eingesetzt werden. Es bewirkt, dass die wasserfeste Faserplatte eine reduzierte Sprödigkeit aufweist. Dadurch bleibt die wasserfeste Faserplatte eben und es wird ein sprödes Bruchverhalten vermieden.

Der Bindemitteleinsatz der Faserplatte gemäß Ausführungsbeispiel ist auf 45 Gew.-% reduziert, selbst unter Berücksichtigung des elastifizierenden Mittels beträgt der Anteil an Bindemittel weniger als 50 Gew.-%; hier namentlich 47,5 Gew.-%. Grundsätzlich kann der Bindemittelanteil auf bevorzugt maximal 48 Gew.-% bis minimal 25 Gew.-% bezogen auf atro Faserplatte betragen.

Weiter können optionale Komponenten zugesetzt werden, so wie die in Tabelle 1 aufgeführten Komponenten, die nachfolgend erläutert werden. Es wird in der Regel ein Härter für das Bindemittel auf die Fasern aufgesprüht, hier Ammoniumsulfat in einem Anteil von 0,9 Gew.-%, bezogen auf die jeweils eingesetzte Menge an Bindemittel. Die nichtquellenden Eigenschaften der wasserfesten Faserplatte werden unterstützt, beim Ausführungsbeispiel durch die Zugabe von 1,5 Gew.-% Wachs oder Öl, das hier als Emulsion eingesetzt wird. Schließlich wird die wasserfeste Faserplatte nach dem Ausführungsbeispiel durch den Einsatz von 0,1 Gew.-% Farbe optisch kenntlich gemacht, so dass sie in der Verwendung nicht mit anderen Faserplatten, die nicht-wasserfest sind, verwechselt werden kann.

Im vorliegenden Ausführungsbeispiel können die vorstehend beschriebenen Komponenten gleichzeitig oder nacheinander auf die Fasern aufgebracht werden, wobei das Aufbringen nacheinander bevorzugt wird, weil sich die Dosierung der Komponenten besser steuern lässt. Gemäß Ausführungsbeispiel werden die Fasern anschließend, nach dem Aufbringen der Komponenten, auf einen Feuchtegehalt von ca. 8% getrocknet. Alternativ können die Komponenten, insbesondere die optionalen Komponenten, auch auf bereits getrocknete Fasern aufgebracht werden. Nach einer weiteren Alternative können z. B. Härter, Farbe und hydrophobierendes Mittel auch nach dem Trocknen, aber vor dem Streuen zu einem Faserkuchen auf die bereits getrockneten und mit Bindemittel und elastifizierendem Mittel versehenen Fasern aufgebracht werden.

Die mit allen Komponenten versehenen Fasern werden zu einem Faserkuchen gestreut. Der Faserkuchen wird in einer bekannten, kontinuierlich arbeitenden Doppelbandpresse bei 180 °C und einem Druck von 2,5 N/mm² bei einem Presszeitfaktor von 15 s/mm zu einer wasserfesten Faserplatte verpresst. Diese Bedingungen wurden ausgewählt aus einem Bereich, der eine Presstemperatur von 110°C bis 250 °C und einen Pressdruck von 0,3 N/mm² bis 5,5 N/mm² umfasst. Der Presszeitfaktor kann aus einem Bereich von 6 s/mm bis 60 s/mm gewählt werden. Die so erzeugte wasserfeste Faserplatte weist eine Dicke von 8 mm und eine Dichte von 1113 kg/m³ (atro) auf, vgl. Tabelle 1. Die fertige wasserfeste Faserplatte weist meist einen Feuchtegehalt von ca. 6% auf, so dass das Gewicht der Faserplatte in gebrauchsfertigem Zustand ca. 1.180 kg/m³ beträgt.

**Tabelle 1 Zusammensetzung der wasserfesten Faserplatte (Angaben jeweils 100% Feststoff bzw. atro, jeweils bezogen auf atro wasserfeste Faserplatte)**

| **Komponente** | **Gewicht absolut (kg/m³)** | **Anteil (Gew-%)** |
|---|---|---|
| wasserfeste Faserplatte | 1.113 | 100 |
| Fasern | 556 | 50 |
| Melaminharz | 325 | 29 |
| Harnstoffharz | 175 | 16 |
| Ammoniumsulfat | 10 | 0,9 |
| Styrolacrylat | 28 | 2,5 |
| Emulsion | 17 | 1,5 |
| Farbe | 2 | 0,1 |

Die so hergestellte wasserfeste Faserplatte wird als unbeschichtete Faserplatte in Anlehnung an die DIN EN 317 auf Quellung und gemäß DIN 13329 auf Kantenquellung geprüft. Die Dickenquellung wird in der Probenmitte als Veränderung in mm bezogen auf die Ausgangs-Dicke von 8 mm absolut und auch als relative Änderung bestimmt. Kantenquellung wird an einer Kante des beschichteten Werkstoffs als Veränderung in mm bezogen auf die Ausgangs-Dicke von 8 mm absolut und auch als relative Änderung (%) bestimmt.

Die Dickenquellung für die nach dem vorstehenden Ausführungsbeispiel hergestellte wasserfeste Faserplatte beträgt weniger als 2% bezogen auf die Dicke der Faserplatte. Sie ist damit gegenüber der Dickenquellung einer nicht-wasserfesten Faserplatte, die bei über 20% liegt, um mehr als 90% reduziert. Die Kantenquellung der wasserfesten Faserplatte nach dem Ausführungsbeispiel beträgt weniger als 1,5%, während die Kantenquellung einer bekannten, nicht-wasserfesten Faserplatte bei mehr als ca. 15% liegt. Auch hier ist die Kantenquellung also um ca. 90% reduziert. Dieses Ergebnis ist umso erstaunlicher, als die wasserfeste Faserplatte nach der Erfindung Harnstoffharz aufweist. Bei der wasserfesten Faserplatte nach dem Ausführungsbeispiel sind es 16 Gew.-% bzw. ca. ein Drittel des eingesetzten Bindemittels insgesamt. Trotz dieses hohen Anteils an Harnstoffharz, das der Hydrolyse zugänglich ist, sind die Kantenquellung und die Dickenquellung um ca. 90% und mehr reduziert, wodurch eine wasserfeste Faserplatte bereitgestellt wird, die durch den Einsatz von preiswerterem Bindemittel kostengünstiger herstellbar ist als bekannte, wasserfeste Faserplatten. Zudem ergibt sich ein signifikanter Kostenvorteil dadurch, dass der Bindemittelanteil auf 45% reduziert wurde. Ein weiterer, wesentlicher Kostenvorteil ergibt sich durch den Einsatz von Harnstoffharz, das, obwohl durch Wasser hydrolysierbar, hier bei der Herstellung einer wasserfesten Faserplatte Verwendung findet. Selbst unter Berücksichtigung des elastifizierenden Mittels ergibt sich ein Bindemitteleinsatz von unter 50 Gew.-%, hier von 47,5 Gew.-%.

Trotz dieser geänderten Zusammensetzung weist die wasserfeste Faserplatte gegenüber der aus der WO 2020/211988 A1 bekannten wasserfesten Faserplatte auch vergleichbare Festigkeitseigenschaften auf. Damit kann die erfindungsgemäße preiswerte und wasserfeste Faserplatte in gleicher Weise eingesetzt werden wie die bekannte wasserfeste Faserplatte.

Die erfindungsgemäße Faserplatte lässt sich gut beschichten, wobei die Beschichtung meist die Dickenquellung und ggf. auch die Kantenquellung weiter reduziert.

## Patentansprüche

1. Verfahren zum Herstellen einer wasserfesten Faserplatte, aufweisend lignocellulosische Fasern und Bindemittel, mit den Schritten:
- Bereitstellen von Fasern,
- Bereitstellen des Bindemittels,
- Bereitstellen eines elastifizierenden Zusatzes,
- Auftragen des Bindemittels und des elastifizierenden Zusatzes,
- Formen des Faserkuchens aus den mit Bindemittel und elastifizierendem Mittel versehenen Fasern,
- Verpressen des Faserkuchens in einer Presse unter Aushärten des Bindemittels zum Erzeugen einer Faserplatte, wobei
als Bindemittel 25 Gew.-% bis 35 Gew.-% Melaminharz oder Phenolharz und 5 Gew.-% bis 20 Gew.-% Harnstoffharz sowie 0,1 Gew.-% bis 7 Gew.-% des elastifizierenden Zusatzes, jeweils bezogen auf das Gesamtgewicht der Faserplatte atro, eingesetzt werden.

2. Verfahren nach Anspruch 1, **dadurch gekennzeichnet, dass** 25 Gew.-% bis 33 Gew.-%, insbesondere 27 Gew.-% bis 31 Gew.-% Melaminharz oder Phenolharz, jeweils bezogen auf das Gesamtgewicht der Faserplatte atro, eingesetzt werden.

3. Verfahren nach Anspruch 1 oder 2, **dadurch gekennzeichnet, dass** 5 Gew.-% bis 18 Gew.-% Harnstoffharz, bevorzugt 12 Gew.-% bis 18 Gew.-%, vorteilhaft 14 Gew.-% bis 17 Gew.-% Harnstoffharz, jeweils bezogen auf das Gesamtgewicht der Faserplatte atro, eingesetzt werden.

4. Verfahren nach einem der vorstehenden Ansprüche, **dadurch gekennzeichnet, dass** der Einsatz von Bindemittel mindestens 25 Gew.-% beträgt und bis zu 48 Gew.-%, bevorzugt bis zu 45 Gew.-%, vorteilhaft bis zu 40 Gew.-%, besonders bevorzugt bis zu 35 Gew.-%, besonders vorteilhaft bis zu 30 Gew.-% jeweils bezogen auf das Gesamtgewicht der Faserplatte atro nicht übersteigt.

5. Verfahren nach einem der vorstehenden Ansprüche, **dadurch gekennzeichnet, dass** das Bindemittel Melaminharz oder Phenolharz und Harnstoffharz in einem Verhältnis von 3,5 : 1, bis 1,5 : 1, vorteilhaft von 3 : 1 bis 2:1, besonders vorteilhaft 2,5 : 1, bevorzugt 1,5 : 1 bis 2,5 : 1, bevorzugt 2 : 1 eingesetzt.

6. Verfahren nach einem der vorstehenden Ansprüche, **dadurch gekennzeichnet, dass** 1 Gew.-% bis 5 Gew.-% des elastifizierenden Zusatzes, vorteilhaft 2 Gew.-% bis 4 Gew.-% des elastifizierenden Zusatzes, jeweils bezogen auf das Gesamtgewicht der Faserplatte atro, eingesetzt werden.

7. Verfahren nach einem der vorstehenden Ansprüche, **dadurch gekennzeichnet, dass** 0,1 Gew.-% bis 4 Gew.-% eines hydrophobierenden Mittels bezogen auf das Gesamtgewicht der Faserplatte atro eingesetzt werden, vorteilhaft bis zu 1 Gew.-%.

8. Verfahren nach einem der vorstehenden Ansprüche, **dadurch gekennzeichnet, dass** 0,1 Gew.-% bis zu 2 Gew.-% eines Härters für das Bindemittel eingesetzt werden, insbesondere 0,5 Gew.-& bis zu 1,5 Gew.-%, jeweils bezogen auf das Gesamtgewicht der Faserplatte atro.

9. Verfahren nach einem der vorstehenden Ansprüche, **dadurch gekennzeichnet, dass** 0,01 Gew.-% bis 2 Gew.-% Farbe, vorteilhaft 0,05 Gew.-% bis 1,5 Gew.-% Farbe, jeweils bezogen auf das Gesamtgewicht der Faserplatte atro, eingesetzt werden.

10. Wasserfeste Faserplatte, aufweisend Fasern und Bindemittel, wobei die Faserplatte 25 Gew.-% bis 35 Gew.-% Melaminharz oder Phenolharz und 5 Gew.-% bis 20 Gew.-% Harnstoffharz, jeweils bezogen auf das Gesamtgewicht der Faserplatte atro, aufweist.

11. Faserplatte nach Anspruch 10, **dadurch gekennzeichnet, dass** die Faserplatte, bezogen auf das Gesamtgewicht der Faserplatte atro, mindestens 25 Gew.-%, maximal 48 Gew.-% Bindemittel, vorzugsweise maximal 45 Gew.-%, vorteilhaft maximal 40 Gew.-%, bevorzugt maximal 30 Gew.-% Bindemittel aufweist.

12. Faserplatte nach Anspruch 10 oder 11, **dadurch gekennzeichnet, dass** das Bindemittel Melaminharz oder Phenolharz und Harnstoffharz Verhältnis von 3,5 : 1, bis 1,5 : 1, vorteilhaft von 3 : 1 bis 2:1, besonders vorteilhaft 2,5 : 1, bevorzugt 1,5 : 1 bis 2,5 : 1, bevorzugt 2 : 1 aufweist.

13. Faserplatte nach einem der Ansprüche 10 bis 12, **dadurch gekennzeichnet, dass** die Faserplatte 0,1 Gew-% bis 7 Gew.-% eines elastifizierenden Zusatzes aufweist, wobei der elastifizierende Zusatz aus der Gruppe gewählt wird, die umfasst ein Elastomer, insbesondere Polyvinylacetat (PVAc), Ethyl-Vinyl-Acetat, ein Acrylat, ein Styrolacrylat oder ein Polyurethan (PU), einen Thermoplasten, aber auch ein Glykol, insbesondere ein Mono- oder ein Diethylenglykol, ebenso wie Caprolactam, längerkettige Diole oder Triole, insbesondere Glycerin und auch Polyole, Zucker, Zuckeralkohole oder Guanaminverbindungen.

14. Faserplatte nach einem der Ansprüche 10 bis 13, **dadurch gekennzeichnet, dass** die Faserplatte bis zu 4 Gew.-% Hydrophobierungsmittel, bis zu 2 Gew.-% Farbstoff und/oder bis zu 2 Gew.-% Härter, jeweils bezogen auf das Gesamtgewicht der Faserplatte atro, aufweist.

15. Faserplatte nach einem der Ansprüche 10 bis 14, **dadurch gekennzeichnet, dass** die Faserplatte eine Beschichtung aufweist.

16. Verwendung der wasserfesten Faserplatte nach Anspruch 10 bis 15, **dadurch gekennzeichnet, dass** die Faserplatte für konstruktive Zwecke im Innenausbau und im Außenbau, insbesondere für Fassadenplatten, Außenfensterbänke und Dacheindeckungen eingesetzt wird.

## Claims

1. Method for manufacturing a waterproof fiberboard having lignocellulosic fibers and binders, comprising the steps of:
- providing fibers,
- providing the binder,
- providing an elasticizing additive,
- applying the binder and the elasticizing additive,
- forming the fiberboard cake from the fibers provided with binder and elasticizing additive,
- pressing the fiberboard cake in a press with curing of the binder to generate a fiberboard, wherein
from 25 wt% to 35 wt% of melamine resin or phenolic resin and from 5 wt% to 20 wt% of urea resin and from 0.1 wt% to 7 wt% of the elasticizing additive, in each case based on the total weight of the fiberboard atro, are used as binder.

2. Method according to claim 1, **characterized in that** 25 wt% to 33 wt%, in particular 27 wt% to 31 wt% of melamine resin or phenolic resin, in each case based on the total weight of the fiberboard atro, are used.

3. Method according to claim 1 or 2, **characterized in that** 5 wt% to 18 wt% of urea resin, preferably 12 wt% to 18 wt%, advantageously 14 wt% to 17 wt% of urea resin, in each case based on the total weight of the fiberboard atro, are used.

4. Method according to one of the preceding claims, **characterized in that** the use of binder is at least 25 wt% and does not exceed up to 48 wt%, preferably up to 45 wt%, advantageously up to 40 wt%, particularly preferably up to 35 wt%, particularly advantageously up to 30 wt%, in each case based on the total weight of the fiberboard atro.

5. Method according to one of the preceding claims, **characterized in that** the binder melamine resin or phenolic resin and urea resin is used in a ratio of 3.5 : 1, to 1.5 : 1, advantageously from 3 : 1 to 2 : 1, particularly advantageously 2.5 : 1, preferably 1.5 : 1 to 2.5 : 1, preferably 2 : 1.

6. Method according to one of the preceding claims, **characterized in that** 1 wt.% to 5 wt.% of the elasticizing additive, advantageously 2 wt.% to 4 wt.% of the elasticizing additive, in each case based on the total weight of the fiberboard atro, are used.

7. Method according to one of the preceding claims, **characterized in that** 0.1 wt% to 4 wt% of a hydrophobizing agent are used, advantageously up to 1 wt%, based on the total weight of the fiberboard atro.

8. Method according to one of the preceding claims, **characterized in that** 0.1 wt% to 2 wt% of a hardener is used for the binder, in particular 0.5 wt%& to 1.5 wt%, in each case based on the total weight of the fiberboard atro.

9. Method according to one of the preceding claims, **characterized in that** 0.01 wt% to 2 wt% of color, advantageously 0.05 wt% to 1.5 wt% of color, in each case based on the total weight of the fiberboard atro, are used.

10. Waterproof fiberboard comprising fibers and binder, wherein the fiberboard contains 25 wt.% to 35 wt.% melamine resin or phenolic resin and 5 wt.% to 20 wt.% urea resin, in each case based on the total weight of the fiberboard atro.

11. Fiberboard according to claim 10, **characterized in that** the fiberboard, based on the total weight of the fiberboard atro, contains at least 25 wt%, at most 48 wt% of binder, preferably at most 45 wt%, advantageously at most 40 wt%, preferably at most 30 wt% of binder.

12. Fiberboard according to claim 10 or 11, **characterized in that** the binder contains a melamine resin or phenolic resin and urea resin ratio of 3.5 : 1, to 1.5 : 1, advantageously from 3 : 1 to 2 : 1, particularly advantageously 2.5 : 1, preferably 1.5 : 1 to 2.5 : 1, preferably 2 : 1.

13. Fiberboard according to one of claims 10 to 12, **characterized in that** the fiberboard contains 0.1 wt.-% to 7 wt.-% of an elasticizing additive, the elasticizing additive being selected from the group comprising an elastomer, in particular polyvinyl acetate (PVAc), ethyl vinyl acetate, an acrylate, a styrene acrylate or a polyurethane (PU), a thermoplastic, but also a glycol, in particular a mono- or diethylene glycol, as well as caprolactam, longer-chain diols or triols, in particular glycerin and also polyols, sugars, sugar alcohols or guanamine compounds.

14. Fiberboard according to any one of claims 10 to 13, **characterized in that** the fiberboard contains up to 4 wt% of hydrophobizing agent, up to 2 wt% of colorant and/or up to 2 wt% of hardener, in each case based on the total weight of the fiberboard atro.

15. Fiberboard according to any one of claims 10 to 14, **characterized in that** the fiberboard has a coating.

16. Use of the waterproof fiberboard according to claim 10 to 15, **characterized in that** the fiberboard is used for structural purposes in interior construction and outdoor construction, in particular for facade panels, exterior window sills and roof coverings.

## Revendications

1. Procédé de fabrication d'un panneau de fibres résistant à l'eau, comprenant des fibres lignocellulosiques et un liant, comprenant les étapes consistant à :
- fournir des fibres,
- fournir le liant,
- fournir un additif élastifiant,
- appliquer le liant et l'additif élastifiant,
- former le gâteau de fibres à partir des fibres pourvues du liant et de l'agent élastifiant,
- presser le gâteau de fibres dans une presse avec durcissement du liant pour fabriquer un panneau de fibres, dans lequel
on utilise comme liant 25 % en poids à 35 % en poids de résine mélamine ou de résine phénolique et 5 % en poids à 20 % en poids de résine urée ainsi que 0,1 % en poids à 7 % en poids de l'additif élastifiant, respectivement par rapport au poids total du panneau de fibres atro.

2. Procédé selon la revendication 1, **caractérisé en ce que** 25 % en poids à 33 % en poids, en particulier 27 % en poids à 31 % en poids de résine de mélamine ou de résine phénolique, respectivement par rapport au poids total du panneau de fibres atro, sont utilisés.

3. Procédé selon la revendication 1 ou 2, **caractérisé en ce que** 5 % en poids à 18 % en poids de résine d'urée, de préférence 12 % en poids à 18 % en poids, avantageusement 14 % en poids à 17 % en poids de résine d'urée, respectivement par rapport au poids total du panneau de fibres atro, sont utilisés.

4. Procédé selon l'une des revendications précédentes, **caractérisé en ce que** l'utilisation de liant est d'au moins 25 % en poids et ne dépasse pas 48 % en poids, de préférence jusqu'à 45 % en poids, avantageusement jusqu'à 40 % en poids, de manière particulièrement préférée jusqu'à 35 % en poids, de manière particulièrement avantageuse jusqu'à 30 % en poids, respectivement par rapport au poids total du panneau de fibres atro.

5. Procédé selon l'une des revendications précédentes, **caractérisé en ce que** le liant est une résine mélamine ou une résine phénolique et une résine urée dans un rapport de 3,5 : 1, à 1,5 : 1, avantageusement de 3 : 1 à 2 : 1, plus avantageusement de 2,5 : 1, de préférence de 1,5 : 1 à 2,5 : 1, de préférence de 2 : 1.

6. Procédé selon l'une des revendications précédentes, **caractérisé en ce que** 1 % en poids à 5 % en poids de l'additif élastifiant, avantageusement 2 % en poids à 4 % en poids de l'additif élastifiant, sont utilisés, respectivement par rapport au poids total du panneau de fibres atro.

7. Procédé selon l'une des revendications précédentes, **caractérisé en ce que** l'on utilise de 0,1 % à 4 % en poids d'un agent hydrophobe, par rapport au poids total du panneau de fibres atro, avantageusement jusqu'à 1 % en poids.

8. Procédé selon l'une des revendications précédentes, **caractérisé en ce que** 0,1 % en poids à 2 % en poids d'un durcisseur pour le liant sont utilisés, en particulier 0,5 % en poids & jusqu'à 1,5 % en poids, respectivement par rapport au poids total du panneau de fibres atro.

9. Procédé selon l'une des revendications précédentes, **caractérisé en ce que** 0,01 % en poids à 2 % en poids de couleur, avantageusement de 0,05 % en poids à 1,5 % en poids de couleur, sont utilisés, respectivement par rapport au poids total du panneau de fibres atro.

10. Panneau de fibres résistant à l'eau, présentant des fibres et un liant, le panneau de fibres présentant 25 % en poids à 35 % en poids de résine mélamine ou de résine phénolique et 5 % en poids à 20 % en poids de résine urée, respectivement par rapport au poids total du panneau de fibres atro.

11. Panneau de fibres selon la revendication 10, **caractérisé en ce que** le panneau de fibres présente, par rapport au poids total du panneau de fibres atro, au moins 25 % en poids, au maximum 48 % en poids de liant, de préférence au maximum 45 % en poids, avantageusement au maximum 40 % en poids, de préférence au maximum 30 % en poids de liant.

12. Panneau de fibres selon la revendication 10 ou 11, **caractérisé en ce que** le liant présente un rapport de résine mélamine ou de résine phénolique et de résine urée de 3,5 : 1, à 1,5 : 1, avantageusement de 3 : 1 à 2 : 1, de manière particulièrement avantageuse de 2,5 : 1, de préférence de 1,5 : 1 à 2,5 : 1, de préférence de 2 : 1.

13. Panneau de fibres selon l'une quelconque des revendications 10 à 12, **caractérisé en ce que** le panneau de fibres contient de 0,1 % en poids à 7 % en poids d'un agent élastique.% d'un additif élastifiant, l'additif élastifiant étant choisi dans le groupe comprenant un élastomère, notamment le polyacétate de vinyle (PVAc), l'acétate d'éthyle et de vinyle, un acrylate, un styrène acrylate ou un polyuréthane (PU), un thermoplastique, mais aussi un glycol, notamment un mono- ou un diéthylène glycol, ainsi que du caprolactame, des diols ou triols à plus longue chaîne, notamment du glycérol et aussi des polyols, des sucres, des alcools de sucre ou des composés guanaminiques.

14. Panneau de fibres selon l'une quelconque des revendications 10 à 13, **caractérisé en ce que** le panneau de fibres comprend jusqu'à 4 % en poids d'agent hydrophobe, jusqu'à 2 % en poids de colorant et/ou jusqu'à 2 % en poids de durcisseur, respectivement par rapport au poids total du panneau de fibres atro.

15. Panneau de fibres selon l'une des revendications 10 à 14, **caractérisé en ce que** le panneau de fibres présente un revêtement.

16. Utilisation du panneau de fibres résistant à l'eau selon les revendications 10 à 15, **caractérisée en ce que** le panneau de fibres est utilisé à des fins constructives dans l'aménagement intérieur et dans la construction extérieure, en particulier pour des panneaux de façade, des appuis de fenêtre extérieurs et des couvertures de toit.
